**Europäisches Patentamt**

**European Patent Office**

**Office européen des brevets**

(11) Veröffentlichungsnummer: **0 166 982**

**A1**

## (12) EUROPÄISCHE PATENTANMELDUNG

(21) Anmeldenummer: 85106808.0

(22) Anmeldetag: 03.06.85

(51) Int. Cl.⁴: **A 47 F 5/14**
**F 16 B 7/04, E 06 B 1/62**

(30) Priorität: 05.06.84 DE 3420841

(43) Veröffentlichungstag der Anmeldung:
08.01.86 Patentblatt 86/2

(84) Benannte Vertragsstaaten:
AT BE CH DE FR GB LI NL SE

(71) Anmelder: Gebr. Grotemeyer GmbH & Co.
Westenfeld 68
D-4417 Altenberge(DE)

(72) Erfinder: Beck, Christian
Westenfeld 101
D-4417 Altenberge(DE)

(74) Vertreter: Habbel, Hans-Georg, Dipl.-Ing.
Postfach 3429 Am Kanonengraben 11
D-4400 Münster(DE)

(54) Verbindungsvorrichtung zur Erstellung einer mehrdimensionalen Konstruktion.

(57) Der Anmeldung bezieht sich auf eine Verbindungsvorrichtung zur Erstellung einer mehrdimensionalen Konstruktion mit einem Verbindungskörper (1), der einenendes einen Kugelkörper (2) und anderenendes einen Steckzapfen (3) aufweist und einem Anschlußzapfen (4), der einenendes mit seiner Anlagefläche (6) der Anlagefläche des Teilkugelkörpers (2) entspricht und anderenendes ebenfalls einen Steckzapfen (5) aufweist und eine zentrale Bohrung (8) besitzt, in die ein an dem Teilkugelkörper (2) festzulegender Klemmbolzen (16) einführbar ist.

Fig. 1

EP 0 166 982 A1

"Verbindungsvorrichtung zur Erstellung einer mehrdimensionalen Konstruktion"

Die Erfindung bezieht sich auf eine Verbindungsvorrichtung zur Erstellung einer mehrdimensionalen
Konstruktion, insbesondere zur Bildung von Wandelementen, Schaugestellen, Regalen od. dgl. gemäß
dem Oberbegriff des Hauptanspruches.

In vielen Bereichen der Technik sind solche Verbindungsvorrichtungen oder Knotenverbindungen bekannt, die die Aufgabe haben, den Anschluß sich in
verschiedenen Richtungen erstreckender Konstruktionsbauteile aufzunehmen und festzulegen.

Eine gattungsbildende Verbindungsvorrichtung wird in
der DE-OS 28 32 087 beschrieben, wobei ein Zentralverbinder eingesetzt wird, an den Steckzapfen angeschraubt werden können, wobei die Steckzapfen in die
anzuschließenden Hohlprofile einsetzbar sind. Entscheidend ist, daß die Festlegung der anzuschließenden Hohlprofile an die Steckzapfen erst dann erfolgen kann, wenn die Steckzapfen über die Schraubverbindung an den Zentralverbinder angeschlossen sind.
Da nur dieser Arbeitsablauf erfolgen kann, kommt als
nächste zwingende Einrichtung, daß die Festlegung
der Hohlprofile an den Steckzapfen über seitens der
Hohlprofile aus gesehen von außen zu betätigende weitere Schraubvorrichtungen erfolgen kann. Diese Zwangsläufigkeit schließt weiterhin ein, daß die Steckzapfen mit konischen Anlaufflächen ausgerüstet sind, die mit den Schrauben so zusammenwirken, daß durch Betätigen der Schrauben ein Festziehen der Hohlprofile auf den Steckzapfen in Richtung auf den Zentralverbinder erfolgt.

Diese Konstruktionslösung hat den Nachteil, daß durch die Öffnung in den Hohlprofilen, die Hohlprofile undicht sind, so daß bei einem Einsatz im Freien dann, wenn die Hohlprofile den Witterungseinflüssen ausgesetzt sind, hier Feuchtigkeit eindringen kann. Außerdem besteht die Gefahr, daß entweder die Schrauben über die Außenseite des Hohlprofils vorstehen oder hier ein Loch entsteht, das unschön ist.

Weiterhin besteht der Nachteil, daß sie mutwillig jederzeit von außen bezüglich ihrer festen Verbindung aneinander gelöst werden können, und zwar mit den einfachsten Werkzeugen. Ein festes Anziehen der Verbindung ist von der Wandstärke der Hohlprofile abhängig. Je dünner die Hohlprofile sind, um so geringer ist die Halterung der Schraube in dem Hohlprofil, die ja hier ihr Gewinde hat und wenn die Schraube sogar tief in die Wandung des Hohlprofiles eingeschraubt wird, kann hier ungewollt ein Lösen auftreten. Außerdem kann ein Aufbeulen der Hohlprofile erfolgen.

Werden die miteinander verbundenen Bauteile auf Zug beansprucht, ist die Befestigung zwischen Hohlprofil und Steckzapfen einer Scherbeanspruchung unterworfen, die bekannterweise bei Schrauben nach Möglichkeit vermieden werden soll, da die Schrauben gegen diese quer zu ihren Schraubengängen gerichtete Scherbeanspruchung empfindlich sind.

Der Erfindung liegt die Aufgabe zugrunde, die gattungsbildende Verbindungsvorrichtung dahingehend zu verbessern, daß die Verbindung der Hohlprofile mit den Steckzapfen werkstattintern erfolgen kann, ohne daß die Festlegung der Hohlprofile an den Steckzapfen nach außen sichtbar und von außen betätigbar ist, daß aber trotzdem die Einzelbauteile über ihren Verbindungskörper an der Baustelle durch einfaches Zusammenstecken aneinander anschließbar sind.

Diese der Erfindung zugrundeliegende Aufgabe wird durch die Merkmale des Hauptanspruches gelöst.

Vorteilhafte Ausgestaltungen sind in den Unteransprüchen erläutert.

Ein Ausführungsbeispiel der Erfindung wird nachfolgend anhand der Zeichnung erläutert, wobei der weitere Aufbau und die vorteilhaften Eigenschaften der erfindungsgemäßen Verbindungsvorrichtungen aus diesen Erläuterungen ersichtlich sind. Die Zeichnungen zeigen dabei in

Fig. 1    in einer teilweise geschnittenen Darstellung einen an einem Zentralverbinder angeschlossenen Anschlußzapfen, in

Fig. 2    in einer auseinandergezogenen Darstellungsweise den Zentralverbinder, den Anschlußzapfen und die zur Verbindung erforderlichen Maschinenbauteile, in

Fig. 3    die Anordnung des Bauelementes im Anschluß an ein handelsübliches Blendrahmenprofil und in

Fig. 4    als Beispiel den Aufbau eines sogenannten
Anlehnhauses aus den erfindungsgemäßen
Bauteilen.

In der Zeichnung ist mit 1 ein Verbindungskörper bezeichnet, der im wesentlichen aus einem Teilkugelkörper 2 und einem Steckzapfen 3 besteht. Der Verbindungskörper 1 kann dabei vorzugsweise aus Metall
gefertigt werden, so daß, wenn dieser Verbindungskörper
in Verbindung mit aus Kunststoff bestehenden Profilbauteilen eingesetzt wird, eine Kunststoffbeschichtung vorgenommen werden kann.

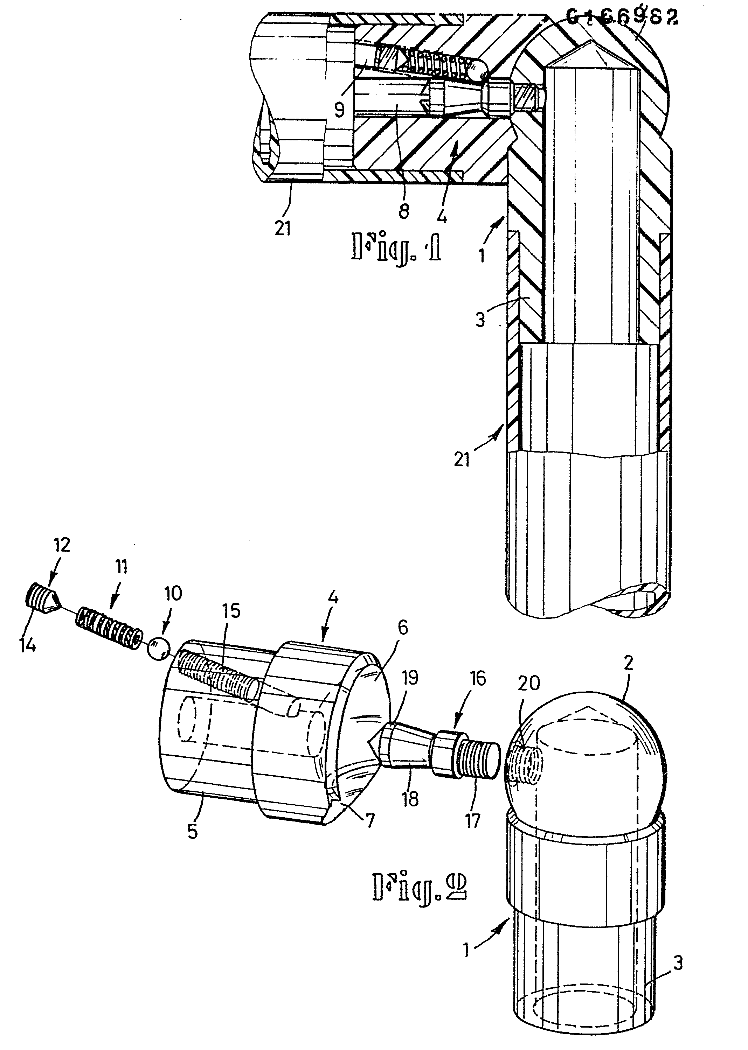

Mit 4 ist ein Anschlußkörper bezeichnet, der ebenfalls einen Steckzapfen 5 aufweist. Dem Steckzapfen
5 gegenüberliegend ist eine Anlagefläche 6 vorgesehen, die der Fläche des Teilkugelkörpers 2 angepaßt ist. Bei dem in den Fig. 1 und 2 dargestellten
Ausführungsbeispiel ist weiterhin eine Ausnehmung 7
vorgesehen, die sich der Form des Steckzapfenoberteils des Verbindungskörpers 1 anpaßt. Im Inneren
des Anschlußkörpers 4 ist eine zentrale Bohrung 8
vorgesehen, die durchlaufend ausgebildet ist. Außerdem ist eine Kugelbohrung 9 vorgesehen, die schräg
zur zentralen Bohrung 8 geführt ist, so daß sich
diese Kugelbohrung 9 in die zentrale Bohrung 8
öffnet.

Die Kugelbohrung 9 nimmt eine Sperrkugel 10, ein
Druckfederelement 11 und einen Schraubenbolzen 12
auf, der mit Außengewinde 14 versehen ist, das mit
einem Innengewinde 15 innerhalb der Kugelbohrung 9
zusammenarbeiten kann. Im eingesetzten Zustand befindet sich die Sperrkugel 10 am unteren Ende der Kugelbohrung 9 und wird durch das Druckfederelement 11 so beaufschlagt, daß es sich stets in den Raum der zentralen Bohrung erstreckt, so daß im Bereich des Umfngs der zentralen Bohrung 8 die Sperrkugel 10 ein Riegelelement schafft.

Mit 16 ist ein Klemmbolzen bezeichnet, der über ein Befestigungsende 17 in eine entsprechende Bohrung 20 im Teilkugelkörper 2 eingesetzt werden kann. Die Bohrung 20 wird den jeweiligen örtlichen Anforderungen entsprechend vorgesehen, womit die gesamte Oberfläche des Teilkugelkörpers 2 zur Aufnahme dieser Bohrung 20 zur Verfügung steht. Hieraus wird ersichtlicht, daß jeder beliebige Anschlußwinkel des Anschlußkörpers 4 erreichbar ist.

Der Klemmbolzen 16 weist ein sich von seinem freien Ende zum Befestigungsende 17 hin verjüngendes konisches Teil 18 auf. An seinem freien Ende ist ein Ringkragen 19 vorgesehen, dessen Außenumfang im wesentlichen dem Innenumfang der zentralen Bohrung 8 entspricht.

Die Längsachse der Kugelbohrung 9 wird so zur Längsachse der zentrlen Bohrung 8 ausgerichtet, daß im Zusammenspiel mit der konischen Fläche 18 des Klemmbolzens 16 eine Selbsthemmung eintritt, d.h. der Winkel beträgt hier im Bereich der Anlage der Kugel an dem konischen Teil 18 des Klemmbolzens 16 etwa 2 bis 4°.

Durch das Zusammenspiel des konischen Bereiches 18 des Klemmbolzens 16 mit der Führung der Kugelbohrung 9 ist es möglich, die Kugelbohrung 9 durch das volle Material des Steckzapfens 5 des Anschlußkörpers 4 zu führen, also die erforderliche Festigkeit für diese Bohrung sicherzustellen.

An den Steckzapfen 3 des Verbindungskörpers 1 und an den Steckzapfen 5 des Anschlußkörpers 4 schließen Bauelemente 21 an, die bei dem dargestellten Ausführungsbeispiel als zylindrischer Rohrkörper dargestellt sind.

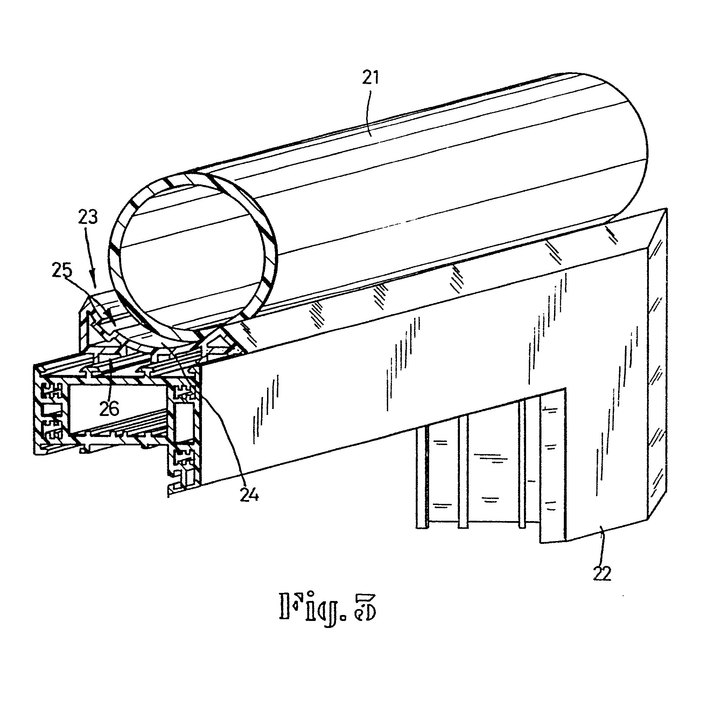

Diese nunmehr in beliebigem Winkel über den Verbindungskörper 1 und den Anschlußkörper 4 aneinander anschließbaren Bauelemente 21 dienen zur Halterung der anzuschließenden Bauteile, beispielsweise dem in Fig. 3 dargestellten Blendrahmen 22. Dies erfolgt unter Zwischenschaltung eines Anschlußprofilelementes 23, das auf seiner zum Bauelement 21 hingerichteten Seite eine Lagerpfanne 24 aufweist, in die eine Vertiefung 25 ausgenommen ist, die der Aufnahme einer in der Zeichnung nicht dargestellten Dichtung oder Dichtmasse dient. Das Anschlußprofilelement 23 ist an seiner eigentlichen Anschlußfläche 26, die der Lagerpfanne 24 gegenüberliegt, mit hakenartigen Verbindungselementen ausgerüstet, die mit den üblicherweise an der Außenseite der handelsüblichen Blendrahmen 22 vorgesehenen Profilvorsprüngen zusammenarbeiten können. Hierdurch erfolgt bereits eine Festlegung des Anschlußprofilelementes 23 am Blendrahmen 22. Trotzdem erfolgt eine zusätzliche Befestigung des Anschlußprofilelementes 23 am Blendrahmen 22 über Schrauben od. dgl., die bis in die Bauelemente 21 geführt werden können, und zwar vom Inneren des Blendrahmens 22 her.

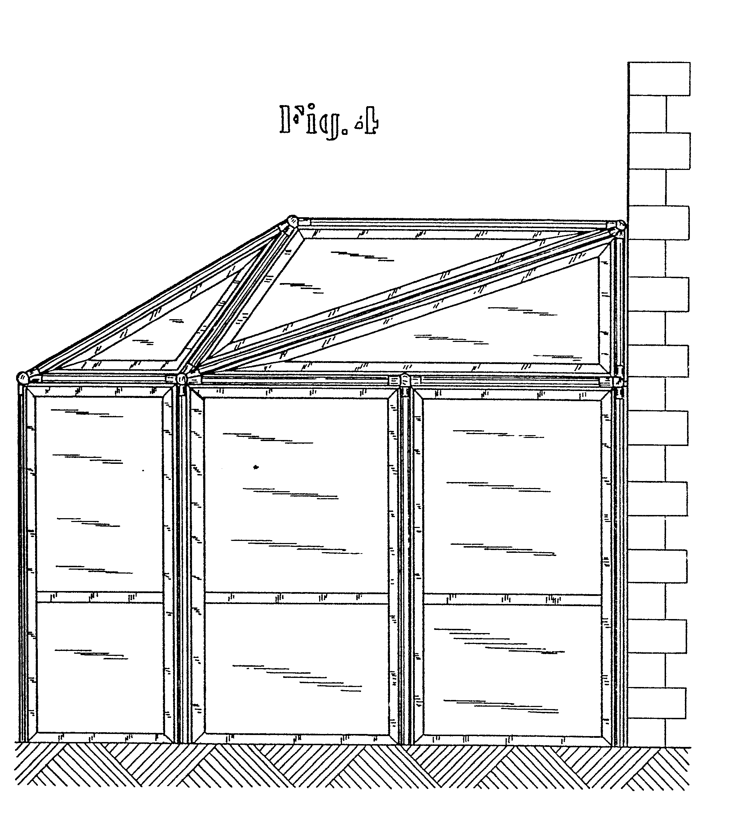

Fig. 4 zeigt, wie mit der erfindungsgemäßen Anordnung ein sogenanntes Anlehnhaus geschaffen werden kann, wobei jeder beliebige Winkel einstellbar ist. Insbesondere aus der Darstellung in Fig. 4 ist ersichtlich, daß der Aufbau dieses Hauses aus den vorbeschriebenen Bauteilen an der Baustelle selbst individuell anpaßbar erfolgen kann, da, wie bereits vorstehend erläutert, der Anschluß der Anschlußkörper 4 an den Verbindungskörper 1 mit jedem beliebigen Winkel erfolgen kann. Außerdem wird durch die vorbeschriebene Konstruktion ein tragfähiges Bauteil erreicht, das den Bauvorschriften in vollem Umfang entspricht.

Patentansprüche:

1. Verbindungsvorrichtung zur Erstellung einer mehrdimensionalen Konstruktion, insbesondere zur Bildung von Wandelementen, Schaugestellen, Regalen od. dgl. mit zwei dem Innenquerschnitt von miteinander zu verbindenden Hohlprofilen (21) angepaßten, in den Hohlprofilen (21) festlegbaren Steckzapfen (3, 5) und einem Verbindungskörper (1) zur Festlegung der Steckzapfen (3, 5) an diesem mittels wenigstens einem in den Verbindungskörper 1 einschraubbaren Bolzen, dadurch gekennzeichnet, daß

a) der eine Steckzapfen (3) fest an dem Verbindungskörper (1) angeordnet ist, der an dem dem Steckzapfen (3) abgewandten Ende einen Teilkugelkörper (2) aufweist,

b) der andere Steckzapfen (5) an einem Anschlußkörper (4) fest angeordnet ist, der einenendes eine Anlagefläche (6) aufweist, die der Anlagefläche des Teilkugelkörpers (2) des Verbindungskörpers (1) angepaßt ist, wobei der Steckzapfen (5) und der Anschlußkörper (4) eine zentrale, sich zur Außenseite der Anlagefläche (6) öffnende Bohrung (8) besitzen,

c) der Bolzen als Klemmbolzen (16) ausgebildet und in die Bohrung (8) einführbar ist, wobei in den Innenraum der Bohrung (8) eine federbelastete Sperrkugel (10) vorsteht, die an der Außenseite des Klemmbolzens (16) im eingesetzten Zustand des Klemmbolzens (16) in die Bohrung (8) zur Anlage kommt und dabei mit einem Winkel anliegt, der eine Selbsthemmung zwischen der Sperrkugel (10) und dem Klemmbolzen (16) bewirkt.

2. Verbindungsvorrichtung nach Anspruch 1, <u>dadurch gekennzeichnet</u>, daß die Sperrkugel (10) in einer Kugelbohrung (9) angeordnet ist, die sich zur Außenseite des Steckzapfens (5) öffnet und mit Innengewinde (15) ausgerüstet ist und daß ein mit Außengewinde (14) versehener Schraubbolzen (12) sich in der Kugelbohrung (9) führt, wobei zwischen der Sperrkugel (10) und dem Schraubbolzen (12) ein Druckfederelement (11) angeordnet ist.

3. Verbindungsvorrichtung nach Anspruch 1 und 2, <u>dadurch gekennzeichnet</u>, daß die Längsachse der Kugelbohrung (9) mit der Längsachse der zentralen Bohrung (8) im Anschlußkörper (4) einen Winkel einschließt, der kleiner als der Selbsthemmungswinkel ist und der Klemmbolzen (16) sich von seinem freien Ende zum Befestigungsende (17) hin konisch verjüngend (bei 18) ausgestaltet ist.

4. Verbindungsvorrichtung nach Anspruch 1 bis 3, <u>dadurch gekennzeichnet</u>, daß der Klemmbolzen (16) an seinem freien Ende einen dem Durchmesser der zentralen Bohrung (8) entsprechenden Durchmesser aufweisenden Ringkragen (19) besitzt.

5. Verbindungsvorrichtung nach einem oder mehreren der vorhergehenden Ansprüche, <u>dadurch gekennzeichnet</u>, daß das dem Verbin-

dungskörper (1) zugewandte Ende des Anschlußkörpers (4) mit der Form des Teilkugelkörpers (2) bzw. der Form der sich an dem Teilkugelkörper anschließenden Bereiche angepaßten Ausnehmungen (7) ausgerüstet ist.

6. Verbindungsvorrichtung wenigstens nach Anspruch 1, gekennzeichnet durch ein Anschlußprofilelement (23) mit einer auf der einen Seite vorgesehenen, dem Außenprofil des Hohlprofils angepaßten Lagerpfanne (24) und mit einer der Lagerpfanne (24) gegenüberliegenden Anschlußfläche (26), mit der das Anschlußprofilelement (23) an dem zugeordneten Wandelement, beispielsweise einem Blendrahmen (22) od. dgl., festlegbar ist.

7. Verbindungsvorrichtung nach Anspruch 6, dadurch gekennzeichnet, daß bei Verwendung handelsüblicher Fenster- und Blendrahmenprofile (22) die Anschlußfläche (26) des Hohl-profils (21) mit hakenförmigen Verbindungs-stegen ausgerüstet ist.

8. Verbindungsvorrichtung nach Anspruch 6 und 7, gekennzeichnet durch eine in der Lagerpfanne (24) des Anschlußprofilelementes (23) vorgesehene nutartige Vertiefung (25) zur Aufnahme einer Dichtung.

9. Verbindungsvorrichtung nach einem oder mehreren der vorhergehenden Ansprüche, dadurch gekennzeichnet, daß die Anschlußkörper (4) und der Verbindungskörper (1) aus Metall und die rohrförmigen Bauelemente (21) sowie

- 4 -

das Anschlußprofilelement (23) aus Kunststoff
bestehen.

1/3

0166982

Fig. 1

Fig. 2

**Fig. 5**

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-1 032 942 (GAUTIER)<br>* Figures 1,4 * | 1 | A 47 F 5/14<br>F 16 B 7/04<br>E 06 B 1/62 |
| A | BE-A- 664 804 (COMPAGNIE GENERALE DU DURALUMIN ET DU CUIVRE)<br>* Figures 4,5 * | 1 | |
| A | US-A-4 150 907 (THURNAUER)<br>* Figures 1,3 * | 1 | |
| A | US-A-1 537 798 (CARR) | | |
| A | US-A-2 762 639 (MOLTER) | | |
| A | US-A-3 632 147 (FINGER) | | **RECHERCHIERTE SACHGEBIETE (Int. Cl.4)** |
| D,A | DE-A-2 832 087 (ARMSTADT) | | A 47 F<br>F 16 B |

Der vorliegende Recherchenbericht wurde für alle Patentansprüche erstellt.

| Recherchenort | Abschlußdatum der Recherche | Prüfer |
|---|---|---|
| DEN HAAG | 19-09-1985 | VAN DER WAL W |